# EUROPEAN PATENT APPLICATION

(11) **EP 2 857 225 A1**
(43) Date of publication of application: **08.04.2015**
(21) Application number: 13800159.9
(22) Date of filing: 05.06.2013
(51) Int. Cl.: B60C 11/12, B60C 11/11

(54) **PNEUMATIC TIRE**

(30) Priority: 05.06.2012 JP 2012128342
(71) Applicant: The Yokohama Rubber Co., Ltd., Minato-ku Tokyo 105-8685 (JP)
(72) Inventor: FURUSAWA, Hiroshi, Hiratsuka-shi Kanagawa 254-8601 (JP)
(74) Representative: Dilg, Haeusler, Schindelmann Patentanwaltsgesellschaft mbH
(86) International application number: PCT/JP2013/065625
(87) International publication number: WO 2013/183685

(57) **Abstract**

This pneumatic tire (1) is provided with a plurality of circumferential main grooves (21, 22) extending in the tire circumferential direction and a plurality of land sections (31, 32) partitioned by the circumferential main grooves (21, 22) (See FIG. 2). The land sections (31, 32) are provided with a plurality of auxiliary sipes (52). In a plan view of a tread, the auxiliary sipes (52) have a bent shape formed by connecting first bent sections (521) and second bent sections (522). A groove depth (Dg) of the circumferential main grooves (21, 22) and a sipe depth (Ds_1) of the first bent sections (521) and a sipe depth (Ds_2) of the second bent sections (522) of the auxiliary sipes (52) have the relationships of 0.5 ≤ Ds_1/Dg ≤ 1.0 and 0.2 ≤ Ds_2/Ds_1 ≤ 0.5.

## Description

### TECHNICAL FIELD

The present invention relates to a pneumatic tire, and in particular to a pneumatic tire with improved braking performance on ice and improved steering stability on snow.

### BACKGROUND

Pneumatic tires such as studless tires, for example, demonstrate improved braking performance on ice by discharging the water film formed on the surface of the ice due to the disposition of a multiplicity of sipes on the tread surface. There is a problem however that when the number of sipes is increased, the rigidity of the land sections decreases and steering stability on snow deteriorates.

Accordingly, the rigidity of the land sections is assured by raising the bottom of the sipes in conventional pneumatic tires. The technologies described in Patent Documents 1 and 2 are known as a conventional pneumatic tires using such a configuration.

### PRIOR ART DOCUMENTS

### Patent Documents

Patent Document 1: Japanese Patent No. 4340112B
Patent Document 2: Japanese Unexamined Patent Application Publication No. 2009-12648A

### SUMMARY OF THE INVENTION

### Problems to be Solved by the Invention

An object of the present invention is to provide a pneumatic tire with improved braking performance on ice and improved steering stability on snow.

### Means to Solve the Problem

In order to achieve the aforementioned object, the pneumatic tire according to the present invention is provided with a plurality of circumferential main grooves extending in the tire circumferential direction and a plurality of land sections partitioned by the circumferential main grooves; wherein, the land sections are provided with a plurality of auxiliary sipes, the auxiliary sipes have a bent shape formed by connecting first bent sections and second bent sections as seen in a plan view of a tread, and a groove depth Dg of the circumferential main grooves and a sipe depth Ds_1 of the first bent sections and a sipe depth Ds_2 of the second bent sections of the auxiliary sipes have the relationships of 0.5 ≤ Ds_1/Dg ≤ 1.0 and 0.2 ≤ Ds_2/Ds_1 ≤ 0.5.

### Effect of the invention

The water absorbency of the land sections is improved when the pneumatic tire according to the present invention is a new tire since the auxiliary sipes are provided with first bent sections having the deeper sipe depth Ds_1. This is advantageous because the braking performance on ice of the tire is improved. Due to the provision of the auxiliary sipes provided with the second bent sections having the shallower sipe depth Ds_2, the rigidity of the land sections is properly assured; thus demonstrating the advantage of improved steering stability on snow of the tire. After the shallow second bent sections have been eroded upon reaching the intermediate period of wear, edge components of the land sections increase during the intermediate period of wear because the first bent sections of the auxiliary sipes remain on the road contact surface of the land sections. As a result, the traction characteristics are improved and the steering stability on snow of the tire is improved.

### BRIEF DESCRIPTION OF THE DRAWINGS

- FIG. 1: is a cross-sectional view in a tire meridian direction illustrating a pneumatic tire according to an embodiment of the present invention.
- FIG. 2: is a plan view illustrating a tread of the pneumatic tire depicted in FIG. 1.
- FIG. 3: is a plan view illustrating a block of the pneumatic tire depicted in FIG. 1.
- FIGS. 4A and 4B: are explanatory views illustrating an auxiliary sipe in the block depicted in FIG. 3.
- FIGS. 5A and 5B: are explanatory views illustrating the effect of the pneumatic tire depicted in FIG. 1.
- FIG. 6: is an explanatory view illustrating an example of a three-dimensional sipe.
- FIG. 7: is an explanatory view illustrating an example of a three-dimensional sipe.
- FIG. 8: is an explanatory view illustrating a modified example of the pneumatic tire depicted in FIG. 1.
- FIG. 9: is an explanatory view illustrating a modified example of the pneumatic tire depicted in FIG. 1.
- FIG. 10: is an explanatory view illustrating a modified example of the pneumatic tire depicted in FIG. 1.
- FIG. 11: is an explanatory view illustrating a modified example of the pneumatic tire depicted in FIG. 1.
- FIG. 12: is an explanatory view illustrating a modified example of the pneumatic tire depicted in FIG. 1.
- FIG. 13: is an explanatory view illustrating a modified example of the pneumatic tire depicted in FIG. 1.
- FIG. 14: is an explanatory view illustrating a modified example of the pneumatic tire depicted in FIG. 1.
- FIG. 15: is an explanatory view illustrating a modified example of the pneumatic tire depicted in FIG. 1.
- FIG. 16: is an explanatory view illustrating a modified example of the pneumatic tire depicted in FIG. 1.
- FIG. 17: is an explanatory view illustrating a modified example of the pneumatic tire depicted in FIG. 1.
- FIG. 18: is an explanatory view illustrating a modified example of the pneumatic tire depicted in FIG. 1.
- FIG. 19: is a plan view illustrating a tread of a modified example of the pneumatic tire depicted in FIG. 1.
- FIG. 20: is a table showing results of performance testing of pneumatic tires according to embodiments of the present invention.

### BEST MODE FOR CARRYING OUT THE INVENTION

The present invention is described below in detail with reference to the accompanying drawings. However, the present invention is not limited to these embodiments. Moreover, constituents which can possibly or obviously be substituted while maintaining consistency with the present invention are included in constitutions of the embodiments. Furthermore, a plurality of modified examples that are described in the embodiments can be combined as desired within a scope apparent to a person skilled in the art.

### Pneumatic tire

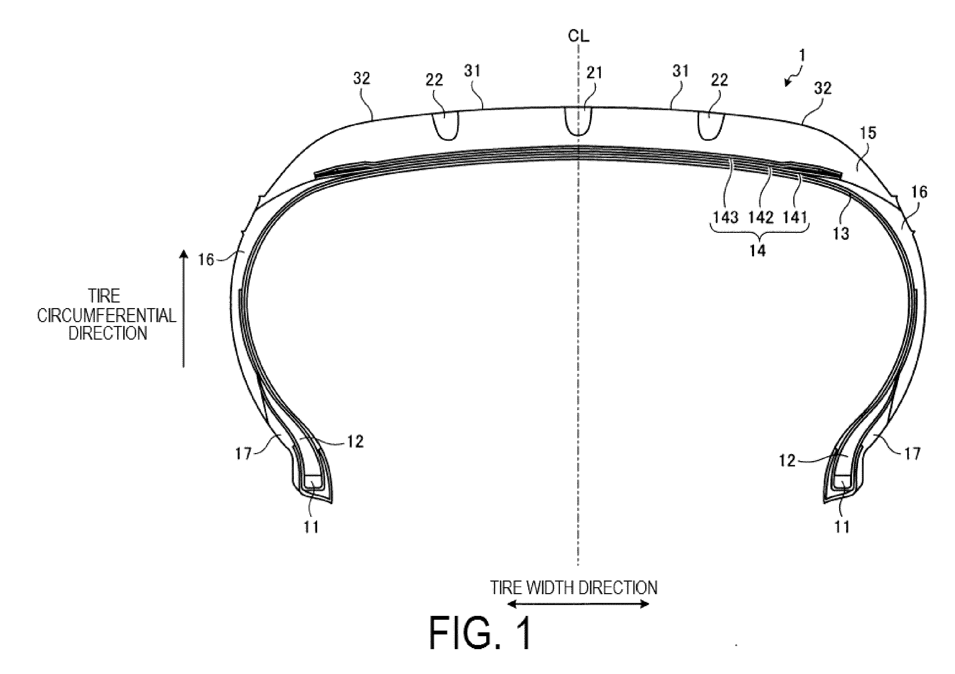

FIG. 1 is a cross-sectional view in a tire meridian direction illustrating a pneumatic tire according to an embodiment of the present invention. FIG. 1 illustrates a radial tire for use on a passenger car as an example of the pneumatic tire 1. Note that the symbol CL refers to a tire equatorial plane.

The pneumatic tire 1 includes a pair of bead cores 11, 11, a pair of bead fillers 12, 12, a carcass layer 13, a belt layer 14, tread rubber 15, a pair of side wall rubbers 16, 16, and a pair of rim cushion rubbers 17, 17 (see FIG. 1).

The pair of bead cores 11, 11 have annular structures and constitute cores of left and right bead sections. The pair of bead fillers 12, 12 are each disposed on peripheries of the pair of bead cores 11, 11 in the tire radial direction so as to reinforce the bead sections.

The carcass layer 13 has a single-layer structure, and stretches between the left and right bead cores 11, 11 in toroidal form, forming a framework for the tire. Additionally, both ends of the carcass layer 13 are folded toward outer sides in the tire width direction so as to wrap around the bead cores 11 and the bead fillers 12, and fixed. The carcass layer 13 is constituted by a plurality of carcass cords formed from steel or organic fibers (e.g. aramid, nylon, polyester, rayon, or the like) covered by a coating rubber and subjected to a rolling process, and has a carcass angle (inclination angle of the carcass cord in the fiber direction with respect to the tire circumferential direction), as an absolute value, of not less than 85 degrees and not more than 95 degrees.

The belt layer 14 is formed by laminating a pair of cross belts 141, 142, and a belt cover 143, disposed on the periphery of the carcass layer 13. The pair of cross belts 141, 142 are constituted by a plurality of belt cords formed from steel or organic fibers, covered by coating rubber, and subjected to a rolling process, having a belt angle, as an absolute value, of not less than 10 degrees and not more than 30 degrees. Furthermore, the pair of cross belts 141, 142 have belt angles (inclination angles of the belt cords in the fiber direction with respect to the tire circumferential direction) denoted with a mutually different symbol, and are laminated so that the fiber directions of the belt cords intersect each other (crossply configuration). The belt cover 143 is configured by a plurality of belt cords formed from steel or organic fibers, covered by coating rubber, and subjected to a rolling process, having a belt angle, as an absolute value, of not less than 10 degrees and not more than 45 degrees. The belt cover 143 is disposed so as to be laminated on the outer side in the tire radial direction of the cross belts 141, 142.

The tread rubber 15 is disposed on the periphery in the tire radial direction of the carcass layer 13 and the belt layer 14, and forms a tread of the tire. The pair of side wall rubbers 16, 16 are disposed on the respective outer sides of the carcass layer 13 in the tire width direction, so as to form left and right side wall sections. The pair of rim cushion rubbers 17, 17 are disposed on the respective outer sides of the left and right bead cores 11, 11 and the bead fillers 12, 12 in the tire width direction, so as to form left and right bead sections.

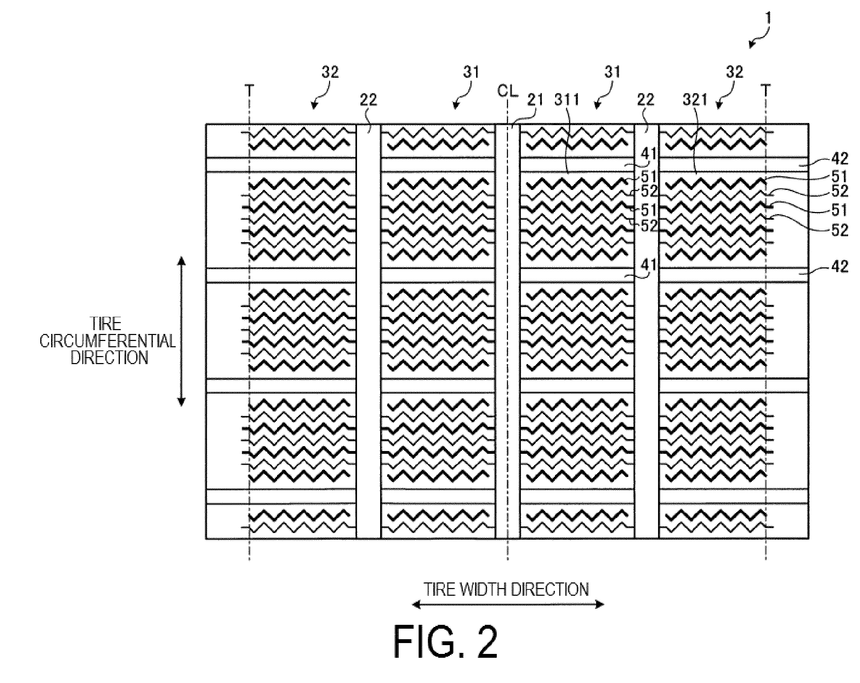

FIG. 2 is a plan view illustrating the tread of the pneumatic tire depicted in FIG. 1. FIG. 2 illustrates the pneumatic tire 1 having a typical block pattern. Note that the symbol T is a tire ground contact edge.

The pneumatic tire 1 is provided with, in the tread, a plurality of circumferential main grooves 21, 22 extending in the tire circumferential direction, a plurality of land sections 31, 32 partitioned by the circumferential main grooves 21, 22, and a plurality of lug grooves 41, 42 disposed in the land sections 31, 32 (see FIG. 2).

For example, three circumferential main grooves 21, 22 are disposed with right-left symmetry relative to the tire equatorial plane CL in the configuration in FIG. 2. Moreover, two rows of center land sections 31, 31 and a pair of left and right shoulder land sections 32, 32 are defined by the circumferential main grooves 21, 22. All of the land sections 31, 32 have the plurality of lug grooves 41, 42, respectively, that extend in the tire width direction. The lug grooves 41, 42 have an open structure that crosses the land sections 31, 32 in the tire width direction, and are arranged with a predetermined pitch in the tire circumferential direction. As a result, all of the land sections 31, 32 form block rows divided into a plurality of blocks 311, 321.

Note that "circumferential main grooves" refer to circumferential grooves having a groove width of 4.0 mm or greater. Moreover, "lug grooves", which will be described hereinafter, refer to lateral grooves having a groove width of 3.0 mm or greater. When measuring these groove widths, the notch portion and the chamfered portion formed in the groove opening portion are omitted. Additionally, "sipe", which will be described hereinafter, refers to a cut formed in a land section, typically with a sipe width of less than 1.0 mm.

### (Auxiliary sipes in blocks)

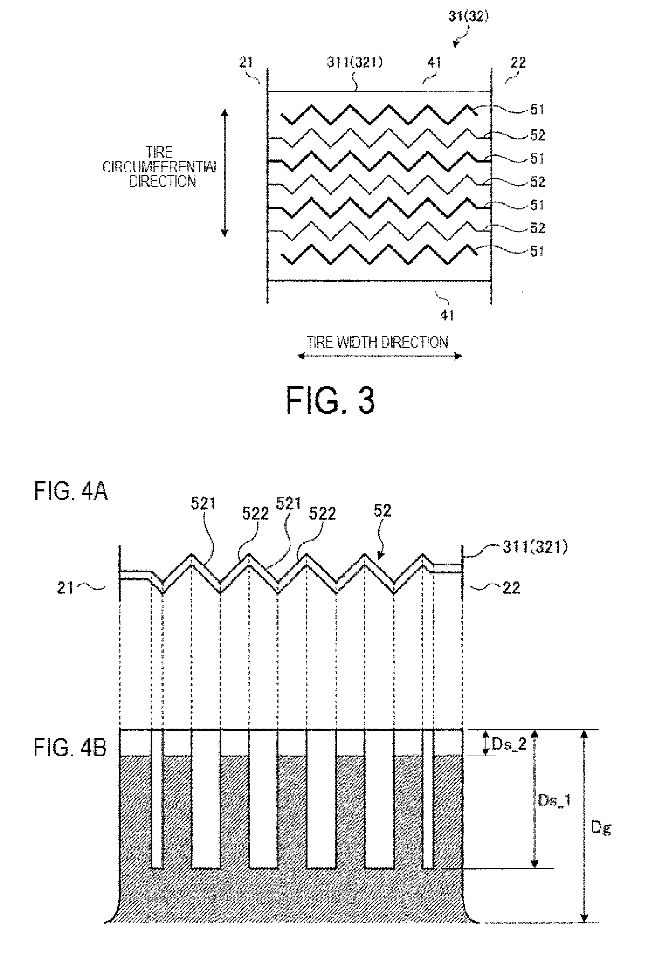

FIG. 3 is a plan view illustrating a block of the pneumatic tire depicted in FIG. 1. FIGS. 4A and 4B are explanatory views illustrating an auxiliary sipe in the block depicted in FIG. 3. In these drawings, FIG. 3 illustrates a single block and FIGS. 4A and 4B illustrate a tread plan view (FIG. 4A) of one auxiliary sipe 52 and a plan view (FIG. 4B) of a sipe wall face of the auxiliary sipe 52.

The land sections 31, 32 in the pneumatic tire 1 are each provided with a plurality of sipes 51, 52 disposed parallel to and spaced away from each other by a predetermined pitch. The sipes 51, 52 are grouped into main sipes 51 and auxiliary sipes 52.

The main sipes 51 are general all-purpose sipes. The main sipes 51 may have a straight shape or a bent shape as seen in a plan view of the tread. The main sipes 51 may have an open structure that passes through the land sections 31, 32, or a closed structure or semi-closed structure that terminates inside the land sections 31, 32. The main sipes 51 may have a raised bottom section in which the sipe depth is reduced. The main sipes 51 may be two-dimensional sipes or three-dimensional sipes.

Note that a two-dimensional sipe is a sipe having a sipe wall face with a linear shape when viewed as a cross-section from a direction perpendicular to the sipe length direction (a so-called planar sipe). A three-dimensional sipe is a sipe having a sipe wall face with a bent shape in the sipe width direction when viewed as a cross-section from a direction perpendicular to the sipe length direction (a so-called cubic sipe). Compared to the two-dimensional sipes, the three-dimensional sipes have a greater mating force between opposing sipe wall faces and, therefore, act to reinforce rigidity of the land sections.

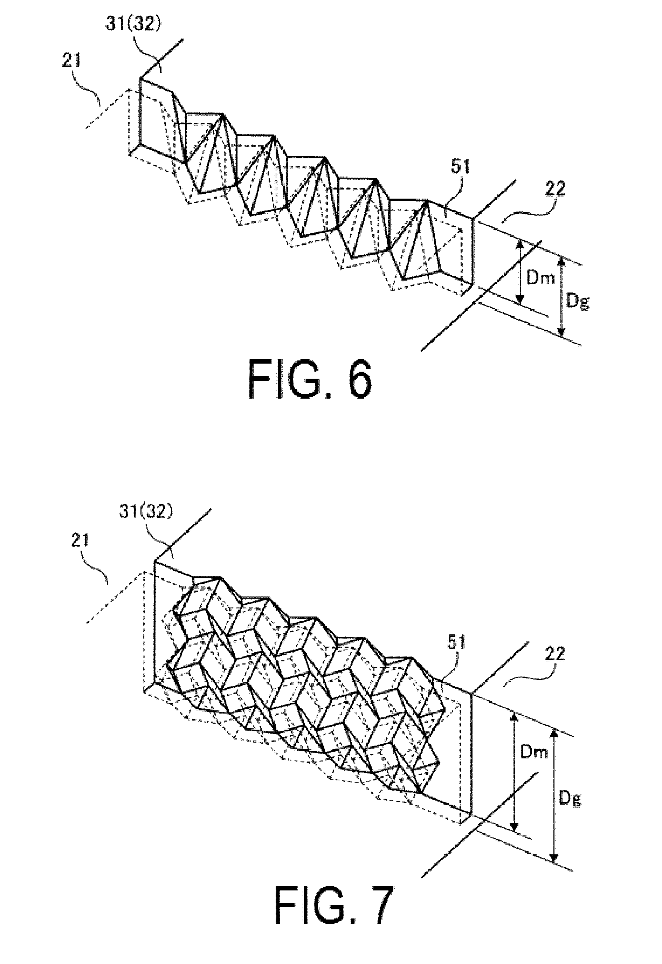

A groove depth Dg of the circumferential main grooves 21, 22 and a sipe depth Dm of the main sipes 51 have the relationship of 0.6 ≤ Dm/Dg ≤ 1.2 (see FIG. 6 and FIG. 7 below). As a result, the main sipes 51 appropriately remain up to the intermediate period of wear of the tire. Note that the groove depth Dg of the circumferential main grooves 21, 22 is measured at the position of the maximum depth of the circumferential main grooves 21, 22. Therefore, if the circumferential main grooves 21, 22 have raised bottom sections, the groove depth Dg is measured excluding the raised bottom sections. The sipe depth Dm of the main sipes 51 is measured at the position of the maximum depth of the main sipes 51. Therefore, if the main sipes 51 have raised bottom sections, the sipe depth Dm is measured excluding the raised bottom sections.

A sipe length Lm of the main sipes 51 when the tire is new and a sipe length Lm' of the main sipes 51 when the tire has reached a 50%-wear period has the relationship of 0.7 ≤ Lm'/Lm. As a result, the main sipes 51 appropriately remain up to the intermediate period of wear of the tire. Note that the length of the sipes is measured as the entire length of the sipes when the sipes have a bent shape as seen in a plan view.

The auxiliary sipes 52 have a bent shape as seen in the plan view of the tread (see FIGS. 4A and 4B). The bent shape includes, for example, a zigzag shape that extends while bending or a wavy shape that extends in a curve. The auxiliary sipes 52 may have an open structure that passes through the land sections 31, 32, or a closed structure or semi-closed structure that terminates inside the land sections 31, 32. The auxiliary sipes 52 may be two-dimensional sipes or three-dimensional sipes.

The auxiliary sipes 52 are configured by connecting first bent sections 521 and second bent sections 522. The first bent section 521 is a sipe portion having a predetermined sipe depth Ds_1 measured relative to the groove depth Dg of the circumferential main grooves 21, 22 or to the sipe depth Dm of the main sipes 51. The second bent section 522 is a sipe portion having a sipe depth Ds_2 that is less than the depth of the first bent sections 521. Specifically, the groove depth Dg of the circumferential main grooves 21, 22 and the sipe depth Ds_1 of the first bent sections 521 and the sipe depth Ds_2 of the second bent sections 522 of the auxiliary sipes 52 have the relationships of 0.5 ≤ Ds_1/Dg ≤ 1.0 and 0.2 ≤ Ds_2/Ds_1 ≤ 0.5.

Furthermore, the auxiliary sipe 52 is configured by the connection of a plurality of first bent sections 521 and a plurality of second bent sections 522 in the sipe length direction in a predetermined arrangement pattern. A total sipe length Ls_1 of the first bent sections 521 and a total sipe length Ls_2 of the second bent sections 522 in one auxiliary sipe 52 have the relationship of 0.25 ≤ Ls_2/(Ls_1 + Ls_2) ≤ 0.75. The total sipe length Ls_2/(Ls_1 + Ls_2) is measured as the sipe length on the road contact surface of the land sections 31, 32.

For example, one block 311 (321) is provided with the plurality of main sipes 51 and the plurality of auxiliary sipes 52 in the configuration in FIG. 2 and FIG. 3. The main sipes 51 have a zigzag shape and extend in the tire width direction and in the same direction relative to each other. The main sipes 51 are disposed parallel to and spaced away from each other by a predetermined pitch in the tire circumferential direction. The sipe depth Dm of the main sipes 51 is set to be within the range of 6 mm ≤ Dm ≤ 8 mm.

The auxiliary sipes 52 are two-dimensional sipes having a zigzag shape (see FIGS. 4A and 4B) and are disposed parallel to and spaced away from the main sipes 51 by a predetermined pitch. One auxiliary sipe 52 is provided between adjacent main sipes 51, 51. As a result, the main sipes 51 and the auxiliary sipes 52 are disposed adjacent to each other in an alternating manner in the tire circumferential direction.

As illustrated in FIG. 4A, the first bent sections 521 of the auxiliary sipes 52 are disposed so that the extension directions thereof are aligned. Specifically, the first bent sections 521 of the auxiliary sipes 52 are inclined in one direction with respect to the tire circumferential direction and the second bent sections 522 of the auxiliary sipes 52 are inclined in another direction (a direction different from the inclination direction of the first bent sections 521) with respect to the tire circumferential direction, whereby the first bent sections 521 and the second bent sections 522 are inclined in directions that differ with respect to each other by a predetermined angle. The first bent sections 521 and the second bent sections 522 are connected to each other so as to configure the zigzag shape of the auxiliary sipes 52. As illustrated in FIG. 4B, the first bent sections 521 having the deeper sipe depth Ds_1 and the second bent sections 522 having the shallower sipe depth Ds_2 are connected to each other to form pectinate auxiliary sipes 52.

The sipe depth Ds_1 of the first bent sections 521 is set to be within the range of 0.60 ≤ Ds_1/Dm ≤ 1.20 with respect to the sipe depth Dm of the main sipes 51. The sipe depth Ds_2 of the second bent sections 522 is shallower than the sipe depth Ds_1 of the first bent sections 521 and is set to be within the range of 0.2 mm ≤ Ds_2 ≤ 2.0 mm.

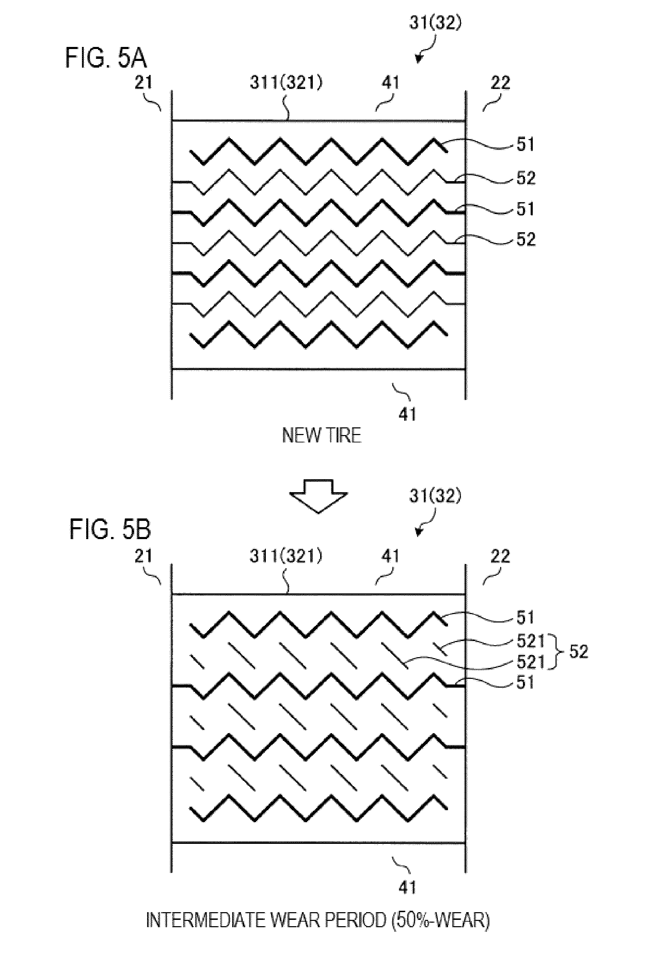

FIGS. 5A and 5B are explanatory views illustrating the effect of the pneumatic tire depicted in FIG. 1. FIG. 5A illustrates the appearance of the road contact surface of the block 311 (321) when the tire is new, and FIG. 5B illustrates the appearance of the road contact surface of the block 311 (321) when the tire has reached the 50%-wear period.

Due to the presence of the auxiliary sipes 52 in the block 311 (321) in the new tire (see FIG. 5A), the block 311 (321) is able to have a highly dense disposition of sipes and an increase in edge components in the block 311 (321) in comparison to a configuration in which the block only has the main sipes (not illustrated). As a result, the traction characteristics are improved and the steering stability on snow of the tire is improved.

The water absorbency of the block 311 (321) is improved in comparison to a configuration having a uniformly shallow sipe depth of the auxiliary sipes (not illustrated) due to the auxiliary sipes 52 being provided with the first bent sections 521 having the deeper sipe depth Ds_1 (see FIGS. 4A and 4B). As a result, the braking performance on ice of the tire is improved.

The second bent sections 522 function as raised bottom sections of the auxiliary sipes 52 due to the auxiliary sipes 52 being provided with the second bent sections 522 having the shallower sipe depth Ds_2. As a result, rigidity of the blocks 311 (321) is properly assured and steering stability on snow of the tire is improved in comparison to a configuration in which the auxiliary sipes have a uniformly deep sipe depth (not illustrated).

Moreover, the auxiliary sipes 52 exhibit a pectinate form due to the connection of the first bent sections 521 having the deeper sipe depth Ds_1 and the second bent sections 522 having the shallower sipe depth Ds_2 in an alternating manner, whereby improved water absorbency and the assurance of rigidity of the blocks 311 (321) can both be realized due to the auxiliary sipes 52. Consequently, the steering stability on snow and the braking performance on ice of the tire are improved in new tires.

The shallower second bent sections 522 are eroded due to wear of the blocks 311 (321), and the main sipes 51 and the first bent sections 521 of the auxiliary sipes 52 remain on the road contact surface when the tire has reached the 50%-wear period (see FIG. 5B). As a result, the edge components in the blocks 311 (321) increase in the intermediate period of wear in comparison to a configuration in which the blocks only have the main sipes (not illustrated). As a result, the traction characteristics are improved and the steering stability on snow of the tire is improved.

Since the first bent sections 521 of the auxiliary sipes 52 are disposed so that extension directions thereof are aligned (see FIG. 4A), only the first bent sections 521 extending in one direction remain on the road contact surface of the blocks 311 (321) when the second bent sections 522 have been eroded due to wear of the blocks 311 (321) (see FIG. 5B). As a result, the edge components of the blocks 311 (321) in a specific direction (extension direction of the first bent sections 521) are assured. As a result, the steering stability on snow of the tire is effectively improved.

Note that the main sipes 51 in the configuration in FIG. 2 are preferably three-dimensional sipes having a bent shape as seen in a plan view of the tread. The following examples may be considered as the aforementioned three-dimensional sipes (see FIGS. 6 and 7).

FIGS. 6 and 7 are explanatory views illustrating examples of the three-dimensional sipe. FIGS. 6 and 7 illustrate sipe wall faces of three-dimensional sipes.

With the three-dimensional sipe of FIG. 6, the sipe wall face has a structure in which pyramids and inverted pyramids are connected in the sipe length direction. In other words, the sipe wall face is formed by mutually offsetting pitches of a zigzag form of the tread surface side and a zigzag form of the bottom side in the tire width direction so that mutually opposing protrusions and recesses are formed between the zigzag forms on the tread surface side and the bottom side. Additionally, with these protrusions and recesses, when viewed in a tire rotating direction, the sipe wall face is formed by connecting a protrusion inflection point on the tread surface side to a recess inflection point on the bottom side, a recess inflection point on the tread surface side to a protrusion inflection point on the bottom side, and protrusion inflection points mutually adjacent to the protrusion inflection point on the tread surface side and the protrusion inflection point on the bottom side with ridge lines; and by connecting these ridge lines with consecutive planes in the tire width direction. Additionally, a first sipe wall face has a corrugated surface wherein convex pyramids and inverted pyramids are arranged alternating in the tire width direction; and a second sipe wall face has a corrugated surface wherein concave pyramids and inverted pyramids are arranged alternating in the tire width direction. Furthermore, with the sipe wall face, at least the corrugated surfaces disposed at outermost sides of both ends of the sipe are oriented toward an outer side of the blocks. Note that examples of such a three-dimensional sipe include the technology described in Japanese Patent No. 3894743.

Additionally, with the three-dimensional sipe of FIG. 7, the sipe wall face has a structure in which a plurality of prism shapes having a block form are connected in the sipe depth direction and the sipe length direction while inclining with respect to the sipe depth direction. In other words, the sipe wall face has a zigzag form in the tread surface. Additionally, the sipe wall face has bent sections in at least two locations in the tire radial direction in the blocks that bend in the tire circumferential direction and are connected in the tire width direction. Moreover, these bent sections have a zigzag form that oscillates in the tire radial direction. Additionally, while, in the sipe wall face, the oscillation is constant in the tire circumferential direction, an inclination angle in the tire circumferential direction with respect to a normal line direction of the tread surface is configured so as to be smaller at a moiety on the sipe bottom side than at a moiety on the tread surface side; and the oscillation in the tire radial direction of the bent section is configured so as to be greater at a moiety on the sipe bottom side than at a moiety on the tread surface side. Note that examples of such a three-dimensional sipe include the technology described in Japanese Patent No. 4316452.

### Modified Examples

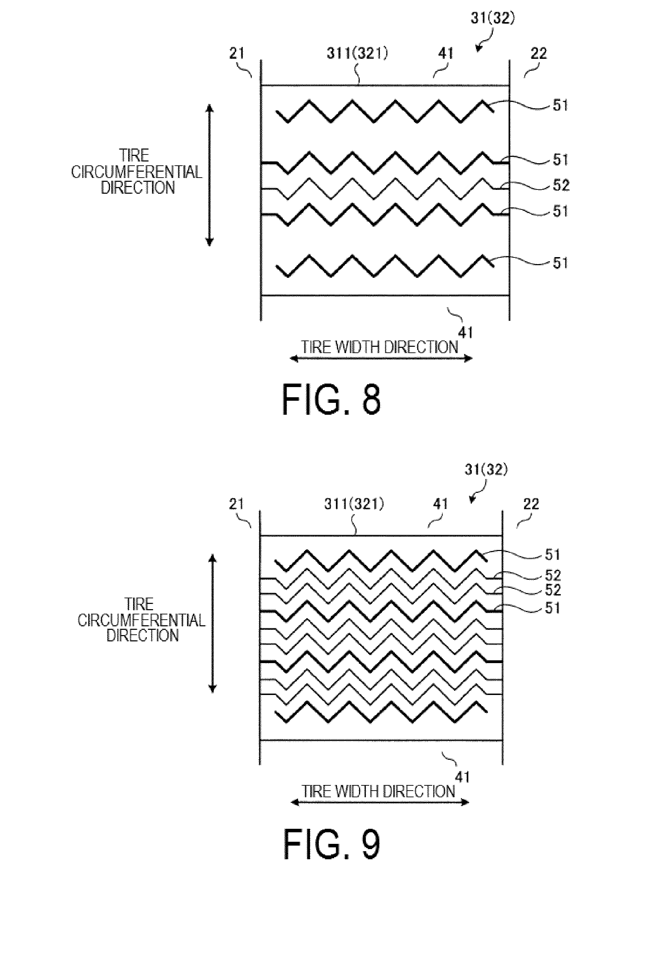

FIGS. 8 and 9 are explanatory views illustrating modified examples of the pneumatic tire depicted in FIG. 1. FIGS. 8 and 9 illustrate a plan view of a single block 311 (321) when the tire is new.

The main sipes 51 and the auxiliary sipes 52 are disposed in an alternating manner in the tire circumferential direction in one block 311 (321) in the configuration illustrated in FIG. 3. In other words, one auxiliary sipe 52 is provided between adjacent main sipes 51, 51. Such a configuration is preferable from the point of view that the steering stability on snow and braking performance on ice of the tire can be improved since the disposition balance between the main sipes 51 and the first bent sections 521 of the auxiliary sipes 52 is optimized during the intermediate period of wear.

However, the configuration is not limited to the above and the disposition pattern of the plurality of main sipes 51 and the plurality of auxiliary sipes 52 may be selected as desired.

For example, a portion of the main sipes 51 are disposed in a continuing manner by leaving a portion that does not have the auxiliary sipe 52 between adjacent main sipes 51, 51 in the configuration in FIG. 8. That is, a portion of the auxiliary sipes 52 are omitted from the configuration in FIG. 3. As a result, the auxiliary sipes 52 may be disposed only in a desirable region of the block 311 (321).

Furthermore, two auxiliary sipes 52 are provided between adjacent main sipes 51, 51 in the configuration in FIG. 9. A plurality of auxiliary sipes 52 may be disposed between adjacent main sipes 51, 51 in this way. As a result, the rigidity of the block 311 (321) can be assured by the second bent sections 522 of the auxiliary sipes 52 and the density of the sipes in the block 311 (321) can be increased. At this time, the number of the auxiliary sipes 52 disposed between adjacent main sipes 51, 51 is preferably three or less.

Note that the number Nm of the main sipes 51 and the number Ns of the auxiliary sipes 52 disposed in one block 311 (321) preferably has the relationship of 0.30 ≤ Ns/(Nm + Ns) ≤ 0.60 in the configurations in FIGS. 8 and 9.

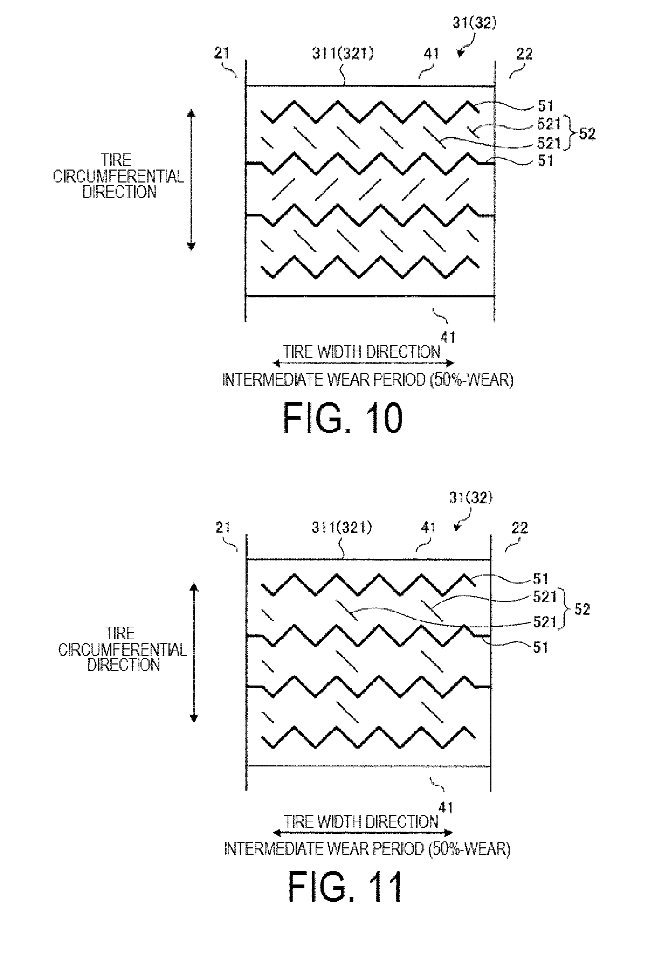

FIGS. 10 to 13 are explanatory views of modified examples of the pneumatic tire depicted in FIG. 1. FIGS. 10 to 13 illustrate states of erosion of the second bent sections 522 during the intermediate period of wear (50%-wear period) due to wearing of the blocks 311 (321). Not that the auxiliary sipes 52 have the zigzag shape that continues in the tire width direction as illustrated in FIG. 5A when the tire is new (not illustrated).

In the configuration in FIG. 3, the first bent sections 521 and the second bent sections 522 extend in directions that differ with respect to each other by a predetermined angle since the first bent sections 521 extend in one direction and the second bent sections 522 extend in another direction in all of the auxiliary sipes 52 disposed in one block 311 (321). Moreover, the auxiliary sipes 52 have a bent shape, and the auxiliary sipes 52 are configured by the first bent sections 521 having the deeper sipe depth Ds_1 and the second bent sections 522 having the shallower sipe depth Ds_2 being connected to each other at the bending points of the bent shape. When the second bent sections 522 are eroded upon reaching the intermediate period of wear in such a configuration, only the first bent sections 521 that extend in one direction remain on the road contact surface of the blocks 311 (321) (see FIG. 5B). Such a configuration is preferable since edge components in a specific direction (extension direction of the first bent sections 521) can be assured.

Conversely, the extension directions of the first bent sections 521 and the second bent sections 522 in adjacent auxiliary sipes 52 differ from each other among the plurality of auxiliary sipes 52 disposed in one block 311 (321) in the configuration in FIG. 10. Such a configuration is preferable from the point of view that the edge components of the first bent sections 521 can remain in a dispersed manner when the second bent sections 522 are eroded upon reaching the intermediate period of wear.

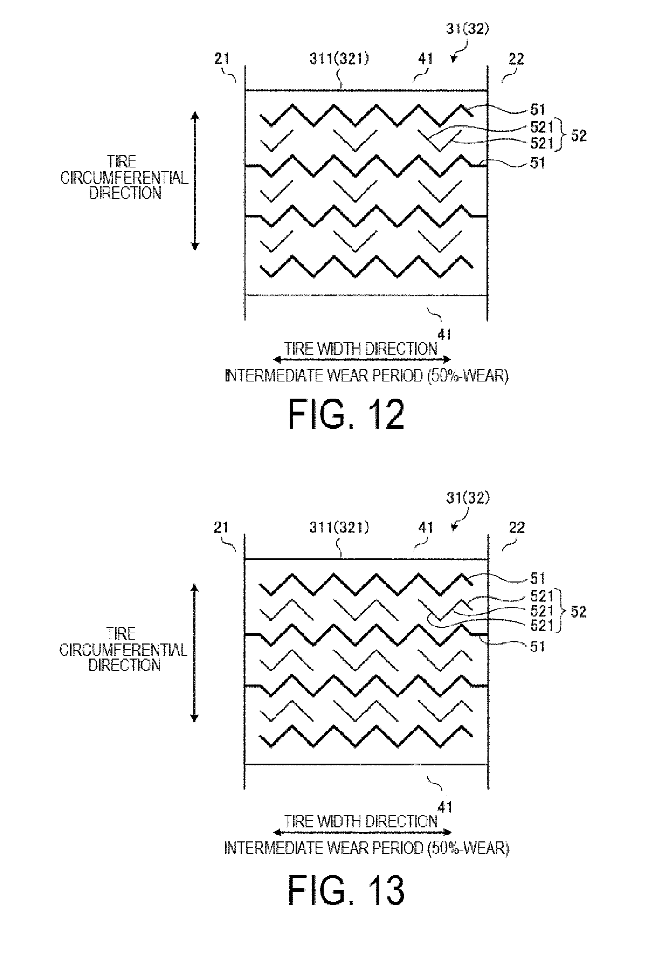

As illustrated in FIGS. 11 to 13, the relationship between the extension direction of the first bent sections 521 and the extension direction of the second bent sections 522 in one auxiliary sipe 52 may be set as desired. As illustrated in FIGS. 12 and 13, a plurality of first bent sections 521 extending in mutually different directions may be disposed so as to be connected to each other in one auxiliary sipe 52.

For example, in the configuration in FIG. 11, the auxiliary sipes 52 are configured by connecting, in an alternating manner, one first bent section 521 inclined in a predetermined direction and three second bent sections 522 (not illustrated) inclined in mutually different directions. As a result, a smaller number of the first bent sections 521 remain than that in the configuration in FIG. 5B when the second bent sections 522 are eroded upon reaching the intermediate period of wear.

Moreover, in the configuration in FIG. 12, the auxiliary sipes 52 are configured by connecting, in an alternating manner, two first bent sections 521 inclined in mutually different directions and two second bent sections 522 (not illustrated) inclined in mutually different directions. As a result, the first bent sections 521 having a V-shape remain when the second bent sections 522 are eroded upon reaching the intermediate period of wear.

Moreover, in the configuration in FIG. 13, the auxiliary sipes 52 are configured by connecting, in an alternating manner, three first bent sections 521 inclined in mutually different directions and one second bent section 522 (not illustrated) inclined in a different direction. As a result, the first bent sections 521 having a Z-shape remain when the second bent sections 522 are eroded upon reaching the intermediate period of wear.

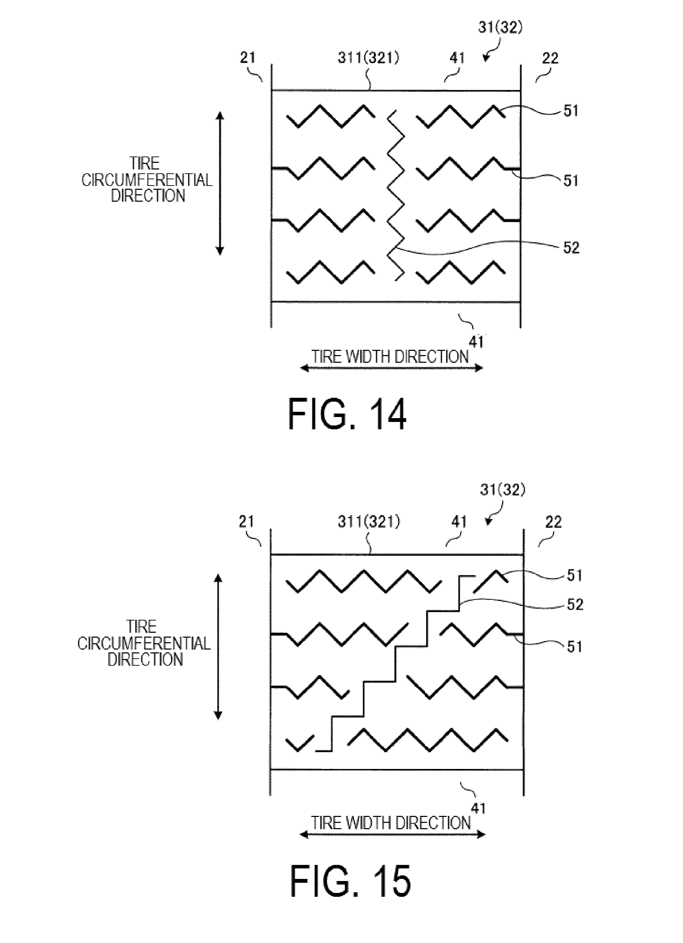

FIGS. 14 and 15 are explanatory views illustrating modified examples of the pneumatic tire depicted in FIG. 1. FIGS. 14 and 15 illustrate a plan view of a single block 311 (321) when the tire is new.

The main sipes 51 and the auxiliary sipes 52 are disposed parallel to and spaced away from each other by a predetermined pitch in one block 311 (321) in the configuration in FIG. 3.

However, without being limited as such, the plurality of main sipes 51 may be disposed parallel to each other and the auxiliary sipe 52 may be disposed so as to extend while being inclined at a predetermined angle with respect to the extension direction of the main sipes 51 in one block 311 (321) as illustrated in FIGS. 14 and 15.

For example, one auxiliary sipe 52 is disposed in the center region in the tire width direction of the block 311 (321) so as to extend in the tire circumferential direction in the configuration in FIG. 14. Moreover, the plurality of main sipes 51 are disposed in left and right regions of the block 311 (321) separated by the auxiliary sipe 52, and extend in the tire width direction while being disposed parallel to each other. The main sipes 51 each extend in a direction substantially perpendicular to the auxiliary sipe 52 and terminate before reaching the auxiliary sipe 52.

In the configuration in FIG. 15, one auxiliary sipe 52 is disposed in the center region of the block 311 (321) so as to extend while being inclined at a predetermined inclination angle with respect to the tire circumferential direction. Moreover, the plurality of main sipes 51 are disposed in regions of the block 311 (321) separated by the auxiliary sipe 52, and extend in the tire width direction while being disposed parallel to each other. The main sipes 51 are each inclined at an inclination angle of substantially 45 degrees with respect to the auxiliary sipe 52, and terminate before reaching the auxiliary sipe 52.

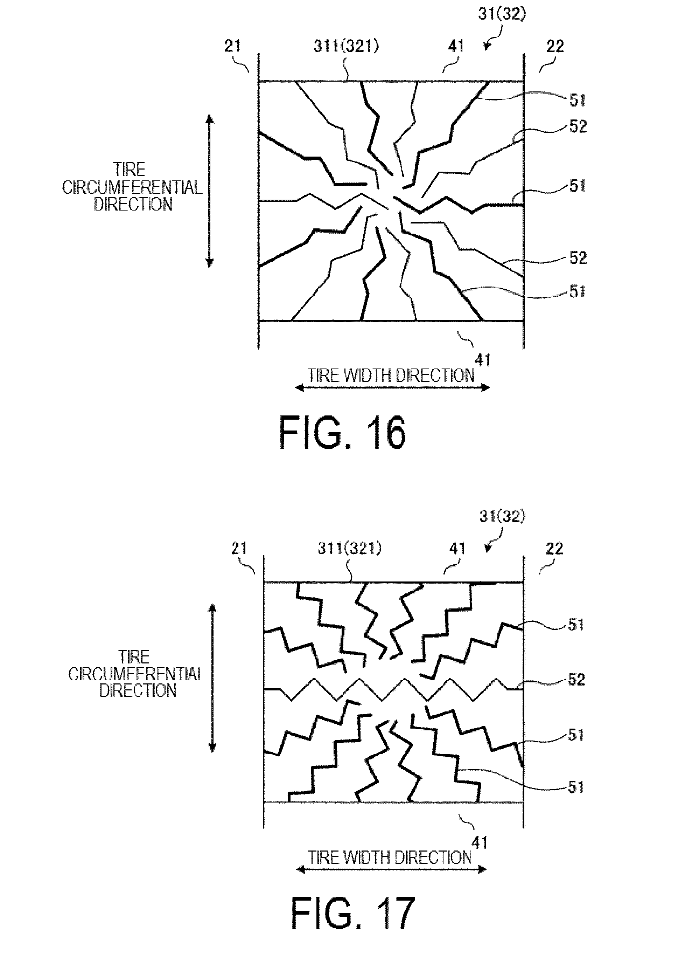

FIGS. 16 to 18 are explanatory views illustrating modified examples of the pneumatic tire depicted in FIG. 1. FIGS. 16 to 18 illustrate a plan view of a single block 311 (321) when the tire is new.

For example, the plurality of main sipes 51 and the plurality of auxiliary sipes 52 extend radially from the center portion of the block 311 (321) toward the edge portion in the configuration in FIG. 16. As a result, the sipes 51, 52 are disposed densely in the center portion of the block 311 (321) and the sipes 51, 52 are disposed sparsely in the edge portion of the block 311 (321). The main sipes 51 and the auxiliary sipes 52 are disposed in an alternating manner in the circumferential direction of the block 311 (321) without intersecting each other. In this case, a plurality of auxiliary sipes 52 may be disposed between adjacent main sipes 51, 51 (not illustrated. See FIG. 9).

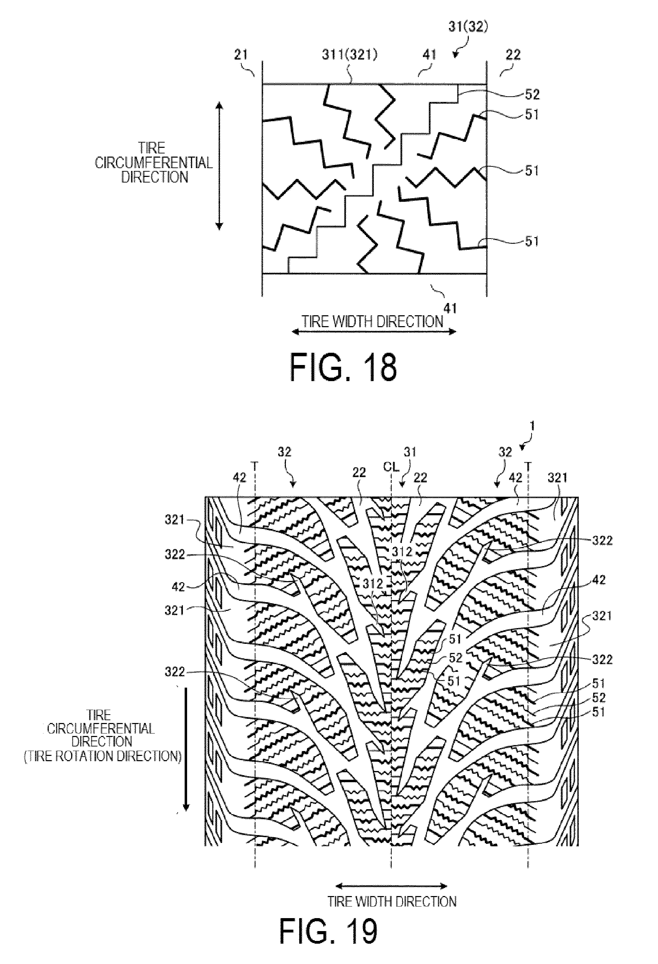

In the configurations in FIGS. 17 and 18, one auxiliary sipe 52 extends in the tire width direction in the middle of the block 311 (321) (FIG. 17), or extends in a direction inclined at a substantially 45-degree angle with respect to the tire circumferential direction. Moreover, the plurality of main sipes 51 are disposed in regions of the block 311 (321) separated by the auxiliary sipe 52. The plurality of main sipes 51 each extend radially from the center portion of the block 311 (321) toward the edge portion. Moreover, the main sipes 51 and the auxiliary sipes 52 do not intersect each other.

Note that, in the configurations in FIGS. 16 to 18, one end portion of the main sipes 51 and one end portion of the auxiliary sipes 52 are open in edge portions in the tire circumferential direction and in the tire width direction of the block 311 (321). However, without being limited in this way, both end portions of the main sipes 51 and the auxiliary sipes 52 may terminate inside the block 311 (321) (not illustrated).

FIG. 19 is a plan view illustrating a tread of a modified example of the pneumatic tire depicted in FIG. 1. FIG. 19 illustrates a tread pattern of a winter tire for a passenger car.

In the configuration in FIG. 2, the pneumatic tire 1 is provided with three circumferential main grooves 21, 22 having a straight shape, a plurality of lug grooves 41, 42 that open into the circumferential main grooves 21, 22, and a plurality of blocks 321, 322 partitioned by the circumferential main grooves 21, 22 and the lug grooves 41, 42. Therefore, the land sections 31, 32 form block rows. The blocks 321, 322 are each provided with the plurality of main sipes 51 and the plurality of auxiliary sipes 52.

However, without being limited in this way, the main sipes 51 and the auxiliary sipes 52 may be disposed in the rib-like land sections 31, 32 (see FIG. 19).

For example, in the configuration in FIG. 19, the pneumatic tire 1 is provided with two circumferential main grooves 22, 22 that extend in the tire circumferential direction while jogging back in a zigzag pattern, and one row of a center land section 31 and left and right shoulder land sections 32, 32 partitioned by the circumferential main grooves 22, 22. The center land section 31 is a rib that continues in the tire circumferential direction and has a plurality of notch grooves 312 that open in one of the circumferential main grooves 22. The center land section 31 is defined by the left and right circumferential main grooves 22, 22 having the zigzag shape and forms a shape that has V-shapes provided consecutively in the tire circumferential direction. The left and right shoulder land sections 32, 32 have a plurality of inclined lug grooves 42 that extend while being inclined with respect to the tire circumferential direction, and are divided into a plurality of blocks 321 by the inclined lug grooves 42. A portion of the blocks 321 have notch grooves 322 that are inclined with respect to the tire circumferential direction and open into the lug grooves 42.

The center land section 31 has the plurality of main sipes 51 and the plurality of auxiliary sipes 52. The main sipes 51 and the auxiliary sipes 52 are disposed so as to be spaced away from each other by a predetermined pitch in an alternating manner in the tire circumferential direction and extend in the tire width direction. The main sipes 51 and the auxiliary sipes 52 are disposed in the branch portions of the V-shape of the center land section 31.

The shoulder land sections 32 have the plurality of main sipes 51 and the plurality of auxiliary sipes 52. The main sipes 51 and the auxiliary sipes 52 are disposed in an alternating manner and parallel to each other along the inclination direction of the inclined lug grooves 42. The main sipes 51 and the auxiliary sipes 52 extend while being inclined at a predetermined angle with respect to the tire circumferential direction and open into the inclined lug grooves 42, 42 adjacent to each other in the tire circumferential direction.

The configuration in FIG. 19 demonstrates increased edge components and improved traction characteristics due to the center land section 31 having the V-shapes provided consecutively in the tire circumferential direction. The rigidity of the center land section 31 is assured due to the center land section 31 having the rib-like structure. As a result, the steering stability on snow of the tire is improved.

### Effects

The pneumatic tire 1 is provided with a plurality of circumferential main grooves 21, 22 extending in the tire circumferential direction and a plurality of land sections 31, 32 partitioned by the circumferential main grooves 21, 22 (see FIG. 2) as described above. The land sections 31, 32 are provided with a plurality of auxiliary sipes 52 (see FIG. 3). The auxiliary sipes 52 have a bent shape formed by connecting the first bent sections 521 and the second bent sections 522 as seen in a plan view of the tread (see FIG. 4A). The groove depth Dg of the circumferential main grooves 21, 22 and the sipe depth Ds_1 of the first bent sections 521 and the sipe depth Ds_2 of the second bent sections 522 of the auxiliary sipes 52 have the relationships of 0.5 ≤ Ds_1/Dg ≤ 1.0 and 0.2 ≤ Ds_2/Ds_1 ≤ 0.5 (see FIG. 4B).

Water absorbency of the land sections (blocks 311, 321) is improved with this configuration since the auxiliary sipes 52 are provided with the first bent sections 521 having the deeper sipe depth Ds_1 when the tire is new (see FIG. 5A). This is advantageous because the braking performance on ice of the tire is improved. Due to the provision of the second bent sections 522 having a shallower sipe depth Ds_2 in the auxiliary sipes 52, the rigidity of the land sections is properly assured; thus demonstrating the advantage of improved steering stability on snow of the tire. The first bent sections 521 of the auxiliary sipes 52 remain on the road contact surface of the land sections even after the shallower second bent sections 522 have been eroded upon reaching the 50%-wear period (see FIG. 5B), and thus the edge components of the land sections are increased in the intermediate period of wear. As a result, the traction characteristics are improved and the steering stability on snow of the tire is improved.

The total sipe length Ls_1 of the first bent sections 521 and the total sipe length Ls_2 of the second bent sections 522 in one auxiliary sipe 52 have the relationship of 0.25 ≤ Ls_2/(Ls_1 + Ls_2) ≤ 0.75 in the pneumatic tire 1. As a result, there is an advantage that the ratio Ls_2 / (Ls_1 + Ls_2) of the second bent sections 522 in the auxiliary sipes 52 is optimized. That is, the proportion of the second bent sections 522 is assured and rigidity of the land sections is assured because of the relationship 0.25 ≤ Ls_2 / (Ls_1 + Ls_2). Moreover, the proportion of the first bent sections 521 is assured and water absorbency of the land sections is improved because of the relationship Ls_2 / (Ls_1 + Ls_2) ≤ 0.75.

In the pneumatic tire 1, the first bent sections 521 in one auxiliary sipe 52 are disposed so that the extension directions thereof are aligned (see FIGS. 4A and 4B). When the second bent sections 522 have eroded upon reaching the intermediate period of wear with such a configuration, edge components facing in specific directions are still assured since the first bent sections 521 are disposed so that the extension direction thereof are aligned. As a result, the steering stability on snow of the tire is effectively improved.

The land sections 31, 32 in the pneumatic tire 1 are provided with the plurality of main sipes 51 (see FIGS. 2 and 3). The sipe depth Dm of the main sipes 51 and the sipe depth Ds_1 of the first bent sections 521 of the auxiliary sipes 52 have the relationship of 0.60 ≤ Ds_1/Dm ≤ 1.20 (see FIGS. 4A and 4B). As a result, there is an advantage that the sipe depth Ds_1 of the first bent sections 521 is optimized.

The main sipes 51 and the auxiliary sipes 52 in the pneumatic tire 1 are disposed parallel to each other (see FIG. 3). As a result, there is an advantage that the edge components of the land sections in the arrangement direction of the sipes 51, 52 can be increased.

The number of auxiliary sipes 52 disposed between a pair of adjacent main sipes 51, 51 in the pneumatic tire 1 is three or less (see FIGS. 3, 8, 9). As a result, there is an advantage that a reduction in the rigidity of the land sections due to the excessive disposition of the auxiliary sipes can be suppressed.

The number Nm of the main sipes 51 and the number Ns of the auxiliary sipes 52 disposed in one block 31, 32 have the relationship of 0.30 ≤ Ns/(Nm + Ns) ≤ 0.60 (see FIGS. 3, 8, 9). As a result, there is an advantage that a reduction in the rigidity of the land sections due to the excessive disposition of the auxiliary sipes can be suppressed.

The groove depth Dg of the circumferential main grooves 21, 22 and the sipe depth Dm of the main sipes 51 in the pneumatic tire 1 have the relationship of 0.6 ≤ Dm/Dg ≤ 1.2 (see FIG. 6). As a result, there is an advantage that the sipe depth Dm of the main sipes 51 is optimized.

The relationship between the sipe length Lm of the main sipes 51 when the tire is new and the sipe length Lm' of the main sipes 51 when the tire has reached the 50%-wear period in the pneumatic tire 1 is 0.7 ≤ Lm'/Lm. As a result, there is an advantage that the main sipes 51 appropriately remain up to the intermediate period of wear of the tire.

The main sipes 51 are three-dimensional sipes (see FIGS. 6 and 7) having a bent shape and the auxiliary sipes 52 are two-dimensional sipes (see FIGS. 4A and 4B) as seen in the plan view of the tread in the pneumatic tire 1. Due to the main sipes 51 being three-dimensional sipes in such a configuration, the rigidity of the land sections is increased and the steering stability on snow of the tire is improved. Due to the auxiliary sipes 52 being two-dimensional sipes, the auxiliary sipes 52 may be easily disposed between the main sipes 51. As a result, there is an advantage that the mixed disposition of the main sipes 51 and the auxiliary sipes 52 is facilitated and the braking performance on ice and the steering stability on snow of the tire are improved. In particular, the facilitation of the mixed disposition of the main sipes 51 and the auxiliary sipes 52 in the configuration in which the main sipes 51 and the auxiliary sipes 52 have a bent shape (see FIG. 3) is especially beneficial.

The plurality of main sipes 51 are disposed parallel to each other and at least one auxiliary sipe 52 extends while being inclined at a predetermined angle with respect to the extension direction of the plurality of main sipes 51 in the pneumatic tire 1 (see FIGS 14, 15). As a result, there is an advantage that a reduction in the rigidity of the blocks 311 (321) due to the disposition of the auxiliary sipes 52 can be suppressed. There is an advantage that the edge action of the blocks 311 (321) is improved due to the disposition of the main sipes 51 and the auxiliary sipes 52 being inclined to each other.

The land sections 31, 32 in the pneumatic tire 1 have the plurality of blocks 321, 322 (see FIG. 2). The plurality of main sipes 51 and at least one auxiliary sipe 52 extend radially from the center portion toward the edge portion of the blocks 311 (321) (see FIGS. 16 to 18). The sipe density in the center portion of the blocks 311 (321) is increased with this configuration. As a result, there is an advantage that the water discharge performance of the blocks 311 (321) is improved and the edge components in the blocks 311 (321) are increased, whereby the braking performance on ice of the tire is improved. The sipe density in the edge portion of the blocks 311 (321) is reduced. As a result, there is an advantage that the rigidity of the edge portion of the blocks 311 (321) is assured and the steering stability on snow of the tire is improved.

### EXAMPLES

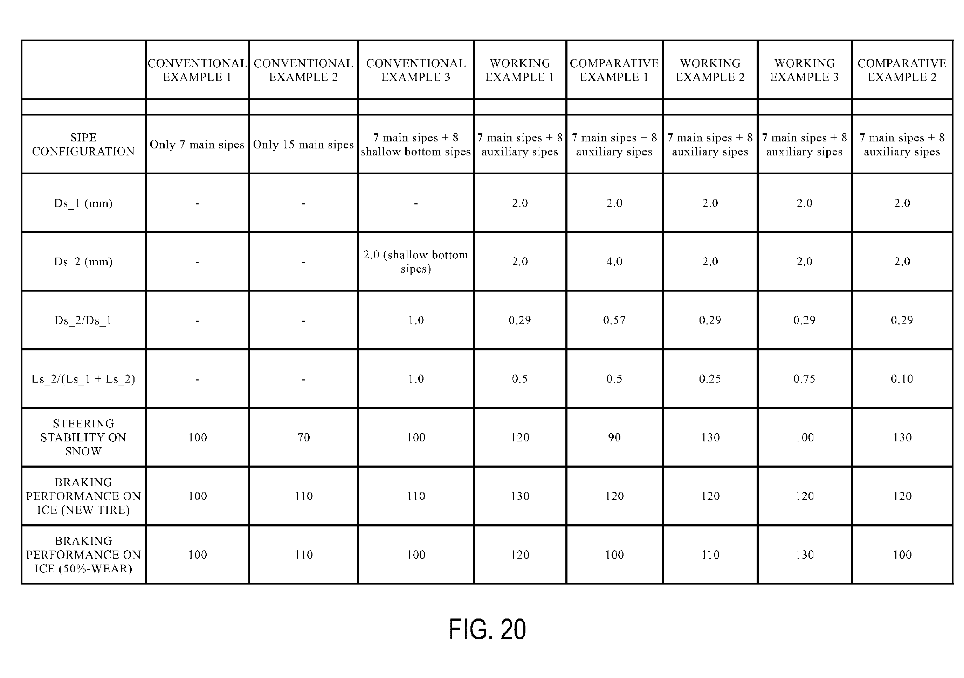

FIG. 20 is a table showing results of performance testing of pneumatic tires according to embodiments of the present invention.

Evaluations of (1) steering stability on snow and (2) braking performance on ice of a plurality of mutually different pneumatic tires were conducted for the performance tests (see FIG. 20). In the performance tests, pneumatic tires with a tire size of 195/65R15 were assembled on a rim having a rim size of 15x6JJ, and an air pressure of 210 kPa and the maximum load defined by JATMA were applied to these pneumatic tires. The pneumatic tires were mounted on a passenger car with a displacement of 2000 cc as a test vehicle.

(1) Evaluations related to steering stability on snow were conducted by driving the test vehicle on a snow-covered road surface in a snow road testing facility, and professional test drivers performed feeling evaluations pertaining to lane changing performance, cornering performance and the like. Results of the evaluations were indexed and the index value of Conventional Example 1 was set as the standard score (100). Higher scores were preferable.

(2) Evaluations related to braking performance on ice were conducted by driving the test vehicle on an ice-covered road surface in an ice road testing facility, and braking distance from an initial velocity of 40 km/h was measured. Results of the evaluations were indexed and the index value of Conventional Example 1 was set as the standard score (100). Higher scores were preferable in the evaluations.

The pneumatic tires 1 of Working Examples 1 to 3 had the structure illustrated in FIGS. 1 to 3. One block 311 (321) had seven main sipes 51 and eight auxiliary sipes 52. The main sipes 51 and the auxiliary sipes 52 were disposed parallel to each other in an alternating manner. The main sipes 51 were three-dimensional sipes having a zigzag shape and did not have a raised bottom section. The auxiliary sipes 52 were two-dimensional sipes having a zigzag shape and had the structure depicted in FIGS. 4A and 4B. The groove depth Dg of the circumferential main grooves 21, 22 was Dg = 8.9 mm, and the sipe depth Dm of the main sipes 51 was Dm = 7.0 mm.

The pneumatic tire of the Conventional Example 1 had only the main sipes 51 and did not have the auxiliary sipes 52 in the pneumatic tire of the embodiment. The sipes 51, 52 in the pneumatic tire of the embodiment were all main sipes 51 in the pneumatic tire of Conventional Example 2. The auxiliary sipes 52 in the pneumatic tire of the Conventional Example 3 were all shallow sipes having a uniform sipe depths (1.0 mm) in the pneumatic tire of the embodiment.

As indicated in the test results, it can be seen that the pneumatic tires of the Working Examples demonstrate improved steering stability on snow and braking performance on ice of the tire in comparison to the pneumatic tires of the Conventional Examples 1 to 3.

### REFERENCE NUMBERS

- 1: Pneumatic tire
- 11: Bead core
- 12: Bead filler
- 13: Carcass layer
- 14: Belt layer
- 141, 142: Cross belts
- 143: Belt cover
- 15: Tread rubber
- 16: Side wall rubber
- 17: Rim cushion rubber
- 21, 22: Circumferential main grooves
- 31: Center land section
- 311: Block
- 312: Notch groove
- 32: Shoulder land section
- 321: Block
- 322: Notch groove
- 41, 42: Lug grooves
- 51: Main sipe
- 52: Auxiliary sipe
- 521: First bent section
- 522: Second bent section

## Claims

1. A pneumatic tire comprising
a plurality of circumferential main grooves extending in a tire circumferential direction, and
a plurality of land sections partitioned by the circumferential main grooves; wherein
the land sections are provided with a plurality of auxiliary sipes;
the auxiliary sipes have a bent shape formed by connecting first bent sections and second bent sections as seen in a plan view of a tread; and
a groove depth (Dg) of the circumferential main grooves and a sipe depth (Ds_1) of the first bent sections and a sipe depth (Ds_2) of the second bent sections of the auxiliary sipes have relationships of 0.5 ≤ Ds_1/Dg ≤ 1.0 and 0.2 ≤ Ds_2/Ds_1 ≤ 0.5.

2. The pneumatic tire according to claim 1 wherein
a total sipe length (Ls_1) of the first bent sections and a total sipe length (Ls_2) of the second bent sections in one of the auxiliary sipes have a relationship of 0.25 ≤ Ls_2/(Ls_1 + Us_2) ≤ 0.75.

3. The pneumatic tire according to claim 1 or claim 2, wherein
the first bent sections in one of the auxiliary sipes are disposed so that extension directions thereof are aligned.

4. The pneumatic tire according to any one of claims 1 to 3, wherein
the land sections are provided with a plurality of main sipes, and
a sipe depth (Dm) of the main sipes and the sipe depth (Ds_1) of the first bent sections have a relationship of 0.60 ≤ Ds_1/Dm ≤ 1.20.

5. The pneumatic tire according to claim 4, wherein
the main sipes and the auxiliary sipes are disposed parallel to each other.

6. The pneumatic tire according to claim 5, wherein
a number of auxiliary sipes disposed between one pair of the main sipes disposed adjacent to each other is three or less.

7. The pneumatic tire according to any one of claims 1 to 6, wherein
a number (Nm) of the main sipes and a number (Ns) of the auxiliary sipes disposed in one of the land sections have a relationship of 0.30 ≤ Ns/(Nm + Ns) ≤ 0.60.

8. The pneumatic tire according to any one of claims 1 to 7, wherein
the groove depth (Dg) of the circumferential main grooves and the sipe depth (Dm) of the main sipes have a relationship of 0.6 ≤ Dm/Dg ≤ 1.2.

9. The pneumatic tire according to any one of claims 1 to 8, wherein
a sipe length (Lm) of the main sipes when a tire is new and a sipe length (Lm') of the main sipes when the tire has reached 50% wear have a relationship of 0.7 ≤ Lm'/Lm.

10. The pneumatic tire according to any one of claims 4 to 9, wherein,
in the plan view of the tread, the main sipes are three-dimensional sipes having a bent shape and the auxiliary sipes are two-dimensional sipes.

11. The pneumatic tire according to any one of claims 1 to 3, wherein
the plurality of main sipes are disposed parallel to each other and at least one of the auxiliary sipes extends while being inclined at a predetermined angle with respect to an extension direction of the plurality of main sipes.

12. The pneumatic tire according to any one of claims 1 to 3, wherein
the land sections have a plurality of blocks and the plurality of main sipes and at least one of the auxiliary sipes extend radially from a center portion toward an edge portion of the block.
